# EUROPEAN PATENT APPLICATION

(11) **EP 4 295 692 A1**
(43) Date of publication of application: **27.12.2023**
(21) Application number: 22756153.7
(22) Date of filing: 15.02.2022
(51) Int. Cl.: A23F 3/16, A23L 2/60, A23L 2/56

(54) **TEA BEVERAGE**

(30) Priority: 19.02.2021 JP 2021025641
(71) Applicant: Suntory Holdings Limited, Osaka 530-8203 (JP)
(72) Inventor: ISHIMATSU, Atsushi, Kawasaki-shi, Kanagawa 211-0067 (JP); YOSHIDA, Naofumi, Kawasaki-shi, Kanagawa 211-0067 (JP); KOBAYASHI, Yasuyuki, Synapse 138623 (SG); KATABUCHI, Nozomi, Soraku-gun, Kyoto 619-0284 (JP)
(74) Representative: Vossius & Partner Patentanwälte Rechtsanwälte mbB
(86) International application number: PCT/JP2022/005851
(87) International publication number: WO 2022/176835

(57) **Abstract**

An object of the present invention is to provide a tea beverage which is perceived to have sugar-like sweetness.

In a tea beverage, an amino acid or a polymeric polyphenol, and at least one selected from the group consisting of furaneol, sotolon, cyclotene, vanillin, and maltol, are incorporated, and the content of furaneol, sotolon, cyclotene, vanillin, or maltol is adjusted to a specified value.

## Description

### TECHNICAL FIELD

The present invention relates to a tea beverage. In particular, this invention relates to a tea beverage comprising an aroma component, wherein the tea beverage is perceived to have sugar-like sweetness.

### BACKGROUND ART

In recent years, the market for tea beverages including green tea, black tea and oolong tea has been growing around the world. In Japan, green tea is commonly drunk without sugar. However, in different countries or regions, it is not uncommon to drink tea beverages with the addition of sugar depending on the type of tea. Rather, from a worldwide perspective, sweet tea beverages are generally preferred at present.

Meanwhile, with a recent increase in consumers' health consciousness and preference for natural products around the world, there is also increasing interest in sugar-free tea beverages. However, sugar-free tea is hardly drinkable due to its unique prominent astringent taste, and is also not palatable due to its lack of sweetness that has been familiar to many people. Thus, there has been a demand to develop tea beverages that are sweet and palatable without the addition of sugar.

Examples of means for enhancing the sweetness of tea beverages include a technique of adding sucralose to a tea beverage (PTL 1), and a technique of adding a tea extract obtained via steam distillation (PTL 2). Meanwhile, furaneol is known to act as a sweetness enhancer (PTL 3), and it is also disclosed that when furaneol is added to a tea beverage, the natural sweetness inherent in high-grade tea leaves can be imparted to the tea beverage (PTL 4). Further, it is disclosed that the heat deterioration odor of a tea beverage can be suppressed by combining furaneol with amino acids and caffeine in appropriate amounts (PTL 5).

### CITATION LIST

### PATENT LITERATURES

PTL 1: Japanese Unexamined Patent Application Publication No. JP 2000-135058
PTL 2: Japanese Unexamined Patent Application Publication No. JP 2010-207116
PTL 3: Japanese Unexamined Patent Application Publication No. JP S50-140659
PTL 4: Japanese Unexamined Patent Application Publication No. JP 2007-167003
PTL 5: Japanese Unexamined Patent Application Publication No. JP 2011-97905

### SUMMARY OF INVENTION

### TECHNICAL PROBLEM

As mentioned above, there have been reported some techniques of enhancing the sweetness of tea beverages. However, tea beverages prepared utilizing such conventional techniques may lose the balance of tea aroma or may not taste sweet enough -- thus-prepared tea beverages are not necessarily satisfactory as tea beverages with sugar-like sweetness which can be perceived to taste sweet and palatable. Therefore, an object of the present invention is to provide a tea beverage that is perceived to have sugar-like sweetness.

### SOLUTION TO PROBLEM

As a result of intensive studies to achieve the aforementioned object, the present inventors found that when a combination of a particular aroma component(s) including furaneol with an amino acid(s) or a polymeric polyphenol(s) is incorporated in a tea beverage, the prepared tea beverage can be perceived to have sugar-like sweetness. Based on this finding, the inventors have completed the present invention.

The present invention is directed, but not limited, to the following.
(1) A tea beverage comprising an amino acid or a polymeric polyphenol, and at least one selected from the group consisting of furaneol, sotolon, cyclotene, vanillin, and maltol, wherein:
   (a) the content of furaneol is not less than 1.0 mg/L;
   (b) the content of sotolon is not less than 0.35 mg/L;
   (c) the content of cyclotene is not less than 10 mg/L;
   (d) the content of vanillin is not less than 1.0 mg/L; or
   (e) the content of maltol is not less than 5.0 mg/L.
(2) The beverage as set forth in (1), comprising an amino acid and a polymeric polyphenol.
(3) The beverage as set forth in (1) or (2), wherein the amino acid is at least one selected from the group consisting of theanine, serine, threonine, proline, glycine, and arginine.
(4) The beverage as set forth in any one of (1) to (3), wherein the content of the polymeric polyphenol is in the range of from 30 to 500 mg/L.
(5) The beverage as set forth in any one of (1) to (4), wherein the beverage is a green tea beverage, an oolong tea beverage, or a black tea beverage.
(6) A method for improving the sweetness of a tea beverage comprising an amino acid or a polymeric polyphenol, and at least one selected from the group consisting of furaneol, sotolon, cyclotene, vanillin, and maltol, the method comprising:
   (a) a step of adjusting the content of furaneol to not less than 1.0 mg/L;
   (b) a step of adjusting the content of sotolon to not less than 0.35 mg/L;
   (c) a step of adjusting the content of cyclotene to not less than 10 mg/L;
   (d) a step of adjusting the content of vanillin to not less than 1.0 mg/L; or
   (e) a step of adjusting the content of maltol to not less than 5.0 mg/L.

### ADVANTAGEOUS EFFECTS OF INVENTION

The present invention can provide a tea beverage which is perceived to have sugar-like sweetness. Also, by utilizing the technique of this invention, sweetness can be imparted to a tea beverage (preferably, a sugar-free tea beverage), or the sweetness of a tea beverage can be enhanced. By utilizing the technique of this invention, there can be provided a tea **beverage that suits consumers' health consciousness and preference for natural foods, like an** unsweetened tea beverage or a tea beverage with no sugar added, and the tea beverage which is perceived to taste sweet and palatable enough.

### BRIEF DESCRIPTION OF DRAWINGS

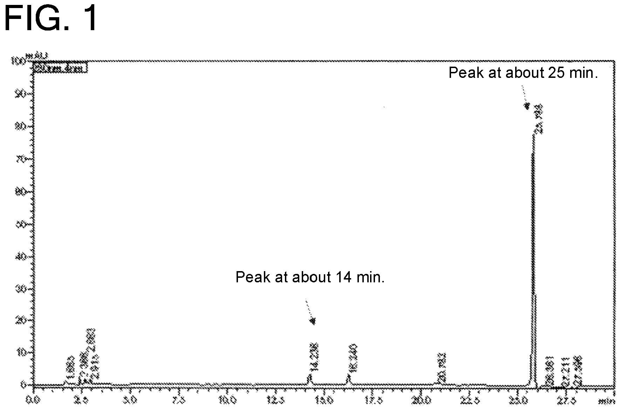

[FIG. 1] FIG. 1 depicts an exemplary HPLC chromatogram obtained by measuring a sample comprising a tea polymeric polyphenol.

### DESCRIPTION OF EMBODIMENTS

One embodiment of the present invention is directed to a beverage, more particularly to a tea beverage. The tea beverage of this invention is characterized by comprising an amino acid or a polymeric polyphenol, and at least one selected from the group consisting of furaneol, sotolon, cyclotene, vanillin, and maltol, and further characterized by satisfying any of the following requirements:
(a) the content of furaneol is not less than 1.0 mg/L;
(b) the content of sotolon is not less than 0.35 mg/L;
(c) the content of cyclotene is not less than 10 mg/L;
(d) the content of vanillin is not less than 1.0 mg/L; or
(e) the content of maltol is not less than 5.0 mg/L.
Unless otherwise specified, the terms "wt.%" and "ppm" as used herein refer to wt.% and ppm on a weight/volume (w/v) basis. Unless otherwise stated herein, all numerical ranges are inclusive of their endpoints.

The beverage of the present invention comprises at least one selected from the group consisting of furaneol, sotolon, cyclotene, vanillin, and maltol. The aforementioned components are aroma components, all of which are known to have sweet aroma. Thus, **these components may also be called "sweet aroma components".** One type of the aforementioned components may be used alone, or two, three or more types of them may be used in combination. Preferably, commercially available products of these components can be used. These components may also be synthetic products or extracts from natural products.

In the present invention, furaneol can be used. Furaneol is an organic compound represented by the chemical formula C₆H₈O₃, and is also called 2,5-dimethyl-4-hydroxy-3(2H)-furanone. Furaneol is assigned CAS Registry No. 3658-77-3. Furaneol is known to have strawberry-like aroma and used as a flavoring for foods or as a perfume ingredient.

When furaneol is used, the content of furaneol in the beverage of the present invention is not less than 1.0 mg/L. When the content of furaneol is not less than 1.0 mg/L, excellent sweetness is more likely to be easily perceived upon combined use of furaneol with an amino acid or a polymeric polyphenol. The content of furaneol in the beverage of this invention is in the range of preferably from 1.0 to 50.0 mg/L, more preferably from 1.5 to 10.0 mg/L, still more preferably from 1.5 to 8.0 mg/L, from 1.5 to 5.0 mg/L, from 3.0 to 8.0 mg/L, or from 3.0 to 5.0 mg/L. The content of furaneol can be measured using a procedure known to skilled artisan, such as HPLC.

In the present invention, sotolon can be used. Sotolon, a kind of lactone, is an organic compound represented by the chemical formula C₆H₈O₃, and also called 4,5-dimethyl-3-hydroxy-2(5H)-furanone. Sotolon is assigned CAS Registry No. 28664-35-9. It is known that sotolon has different aromas depending on the concentration-it has the typical aroma of fenugreek or curry at high concentrations, whereas it smells like maple syrup, caramel, or burnt sugar at low concentrations.

When sotolon is used, the content of sotolon in the beverage of the present invention is not less than 0.35 mg/L. When the content of sotolon is not less than 0.35 mg/L, excellent sweetness is more likely to be easily perceived upon combined use of sotolon with an amino acid or a polymeric polyphenol. The content of sotolon in the beverage of this invention is in the range of preferably from 0.35 to 3.0 mg/L, more preferably from 0.35 to 1.5 mg/L, still more preferably from 0.35 to 1.0 mg/L, or from 0.35 to 0.7 mg/L. The content of sotolon can be measured using a procedure known to skilled artisan, such as HPLC.

In the present invention, cyclotene can be used. Cyclotene is an organic compound represented by the chemical formula C₆H₈O₂, and also called 2-hydroxy-3-methyl-2-cyclopentenone or methylcyclopentenolone. Cyclotene is assigned CAS Registry No. 80-71-7. Cyclotene is known to have a sweet and burnt smell like caramel, and is used as a food or feed additive or a laundry detergent.

When cyclotene is used, the content of cyclotene in the beverage of the present invention is not less than 10 mg/L. When the content of cyclotene is not less than 10 mg/L, excellent sweetness is more likely to be easily perceived upon combined use of cyclotene with an amino acid or a polymeric polyphenol. The content of cyclotene in the beverage of this invention is in the range of preferably from 10 to 150 mg/L, more preferably from 30 to 100 mg/L, still more preferably from 40 to 100 mg/L, from 40 to 80 mg/L, or from 50 to 75 mg/L. The content of cyclotene can be measured using a procedure known to skilled artisan, such as HPLC.

In the present invention, vanillin can be used. Vanillin belongs to a group of compounds called vanilloids, and is an organic compound represented by the chemical formula C₈H₈O₃. Vanillin is also called 4-hydroxy-3-methoxybenzaldehyde, and is assigned CAS Registry No. 121-33-5. Vanillin is known to have the sweet aroma characteristic of vanilla, and widely used as an ingredient for foods, beverages, or perfumes.

When vanillin is used, the content of vanillin in the beverage of the present invention is not less than 1.0 mg/L. When the content of vanillin is not less than 1.0 mg/L, excellent sweetness is more likely to be easily perceived upon combined use of vanillin with an amino acid or a polymeric polyphenol. The content of vanillin in the beverage of this invention is in the range of preferably from 1.0 to 100 mg/L, more preferably from 1.5 to 100 mg/L, still more preferably from 2.0 to 100 mg/L, from 2.0 to 20 mg/L, or from 3 to 10 mg/L. The content of vanillin can be measured using a procedure known to skilled artisan, such as HPLC.

In the present invention, maltol can be used. Maltol is an organic compound represented by the chemical formula C₆H₆O₃, and also called 3-hydroxy-2-methyl-4-pyrone. Maltol is assigned CAS Registry No. 118-71-8. Maltol is known to be one of causative substances of sweet aroma formed by thermal degradation of sugars, and is used as a flavoring or a food additive.

When maltol is used, the content of maltol in the beverage of the present invention is not less than 5.0 mg/L. When the content of maltol is not less than 5.0 mg/L, excellent sweetness is more likely to be easily perceived upon combined use of maltol with an amino acid or a polymeric polyphenol. The content of maltol in the beverage of this invention is in the range of preferably from 5.0 to 50 mg/L, more preferably from 6.0 to 50 mg/L, still more preferably from 8.0 to 40 mg/L, from 8.0 to 35 mg/L, or from 10 to 30 mg/L. The content of maltol can be measured using a procedure known to skilled artisan, such as HPLC.

When furaneol, sotolon, cyclotene, vanillin, and maltol as mentioned above are contained in a tea extract, the aforementioned contents of these components are meant to be inclusive of the contents of these components in the tea extract.

The beverage of the present invention comprises an amino acid and/ or a polymeric polyphenol. Examples of the amino acid contained in the beverage of this invention include, but are not particularly limited to, alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, and theanine. In this invention, any one or more of theanine, serine, threonine, proline, glycine, and arginine is preferably used. In this invention, one type of amino acid may be used alone, or two, three or more types of amino acids may be used in combination.

Amino acids generally exist in two forms: D- and L-isomers. In this invention, the amino acid may exist as a D- or L-isomer, or may also exist as a DL-isomer which contains both D- and L-isomers. Preferably, commercially available products of amino acids can be used. In this invention, the amino acid can be obtained by any of the fermentation method, enzymatic method, extrusion method, and synthesis method -- the amino acid production method is not particularly limited.

When theanine is used as an amino acid, the content of theanine in the beverage of the present invention is in the range of, for example, from 2.0 to 2000 mg/L, preferably from 20 to 1500 mg/L, more preferably from 80 to 1300 mg/L, or from 900 to 1200 mg/L. When serine is used as an amino acid, the content of serine in the beverage of this invention is in the range of, for example, from 0.2 to 5000 mg/L, preferably from 1.0 to 4900 mg/L, more preferably from 2.5 to 4850 mg/L, or from 3600 to 4800 mg/L. When threonine is used as an amino acid, the content of threonine in the beverage of this invention is in the range of, for example, from 0.1 to 5000 mg/L, preferably from 1.0 to 4900 mg/L, more preferably from 2.5 to 4850 mg/L, or from 3600 to 4800 mg/L. When proline is used as an amino acid, the content of proline in the beverage of this invention is in the range of, for example, from 0.3 to 5000 mg/L, preferably from 0.5 to 4900 mg/L, more preferably from 2.5 to 4850 mg/L, or from 3600 to 4800 mg/L. When glycine is used as an amino acid, the content of glycine in the beverage of this invention is in the range of, for example, from 0.1 to 5000 mg/L, preferably from 0.2 to 4900 mg/L, more preferably from 0.5 to 4850 mg/L, or from 3600 to 4800 mg/L. When arginine is used as an amino acid, the content of arginine in the beverage of this invention is in the range of, for example, from 0.1 to 1200 mg/L, preferably from 3.0 to 800 mg/L, more preferably from 8.0 to 600 mg/L, or from 259 to 600 mg/L. When the content of an amino acid falls within any of the aforementioned ranges, excellent sweetness is more likely to be easily perceived upon combined use of the amino acid with any of the aforementioned aroma components. The contents of different amino acids can be measured using a procedure known to skilled artisan, such as HPLC.

The total content of amino acids in the beverage of the present invention is not particularly limited, and is, for example, not less than 5.0 mg/L, not less than 10 mg/L, not less than 40 mg/L, not less than 60 mg/L, not less than 100 mg/L, not less than 250 mg/L, or not less than 500 mg/L. The total content of amino acids is not particularly limited, and is, for example, not more than 10000 mg/L, not more than 8000 mg/L, not more than 6000 mg/L, not more than 5000 mg/L, not more than 4500 mg/L, not more than 4000 mg/L, not more than 3500 mg/L, not more than 3000 mg/L, or not more than 2500 mg/L. Thus, the total content of amino acids in the beverage of this invention is not particularly limited, and is the range of, for example, from 5.0 to 10000 mg/L, preferably from 60 to 5000 mg/L, more preferably from 100 to 3000 mg/L. The total content of amino acids is expressed as the sum of the contents of different amino acids.

When theanine and arginine are used as amino acids, the total content of theanine and arginine in the beverage of the present invention is, for example, not less than 90 mg/L, preferably not less than 120 mg/L, more preferably not less than 140 mg/L. The weight ratio of theanine content to arginine content in the beverage of this invention ([theanine content]/[arginine content]) is in the range of, for example, from 5 to 50, preferably from 7 to 20, more preferably from 8 to 13.

When furaneol is used in the present invention, the weight ratio of total amino acid content to furaneol content ([total amino acid content]/[furaneol content]) is in the range of, for example, from 0.1 to 5000, preferably from 0.5 to 1000, more preferably from 1 to 300. When sotolon is used, the weight ratio of total amino acid content to sotolon content ([total amino acid content]/[sotolon content]) is in the range of, for example, from 1 to 2000, preferably from 4 to 1000, more preferably from 6 to 500. When cyclotene is used, the weight ratio of total amino acid content to cyclotene content ([total amino acid content]/[cyclotene content]) is in the range of, for example, from 0.05 to 100, preferably from 0.1 to 30, more preferably from 0.1 to 10. When vanillin is used, the weight ratio of total amino acid content to vanillin content ([total amino acid content]/[vanillin content]) is in the range of, for example, from 0.05 to 1000, preferably from 1 to 500, more preferably from 2 to 100. When maltol is used, the weight ratio of total amino acid content to maltol content ([total amino acid content]/[maltol content]) is in the range of, for example, from 0.1 to 150, preferably from 0.3 to 100, more preferably from 0.5 to 50.

**As referred to in the present invention, the "polymeric polyphenol" refers to a** polymer of polyphenols. The polymeric polyphenol used in this invention is preferably a tea polymeric polyphenol obtained by polymerizing catechins. The tea polymeric **polyphenol (also called "tea polymeric catechin)** is a kind of polyphenol, and is known to have unique bitter and astringent tastes.

**As referred to herein, the "tea polymeric polyphenol" refers to** a polyphenolic polymer having a structure in which a plurality of non-polymerized monomeric catechins (*i.e.*, (+)-catechin, (-)-epicatechin, (+)-gallocatechin, (-)-epigallocatechin, (-)-catechin gallate, (-)-epicatechin gallate, (-)-gallocatechin gallate, and (-)-epigallocatechin gallate (hereinafter **also referred to as "non**-polymeric **catechins")) are linked together by a tea**-derived or any other enzyme, light exposure, change in pH, or the like. The tea polymeric polyphenol can be quantitatively analyzed by HPLC as described later in the Examples section.

In the quantitative analysis of a tea polymeric polyphenol, the peak of the tea polymeric polyphenol may overlap with those of other components. Examples of a beverage containing such other components include, but are not limited to, beverages containing a fruit juice and beverages containing a plant extract. In such a case, the analysis conditions are fit for identification of the tea polymeric polyphenol but not for quantification of the tea polymerized polyphenol. In that case, the peak that appears at about 14 min. is used for quantification. A value obtained by multiplying the peak area at about 14 min. by 10 is compared with the peak area that appears at about 25 min., and if the former value is smaller, the former value is used for quantification of the tea polymeric polyphenol. FIG. 1 depicts an exemplary HPLC chromatograph showing such peaks.

In an embodiment of the present invention, the origin of a tea polymeric polyphenol is not particularly limited. For example, the tea polymeric polyphenol may be the one derived from a natural product, the one available in the market, or the one synthesized by an organic chemica**l procedure. From the viewpoint of increased consumers'** preference for natural products in recent years, it is preferred that the tea polymeric polyphenol should be the one derived from a natural product. Examples of a natural product include, but are not limited to, tea (*e.g.*, green tea, white tea, black tea, oolong tea, mate tea). In an embodiment of this invention, the tea polymeric polyphenol is preferably derived from tea, more preferably derived from semi-fermented or fermented tea leaves rich in a tea polymeric polyphenol, particularly preferably derived from oolong tea leaves. The tea polymeric polyphenol may also be a mixture of tea polymeric polyphenols derived from different origins.

Specific examples of the tea polymeric polyphenol used in an embodiment of the present invention include not only tea polymeric polyphenols called by trivial names such as thearubigin, but also tea polymeric polyphenols exemplified by:
an epigallocatechin gallate dimer represented by the formula (1): 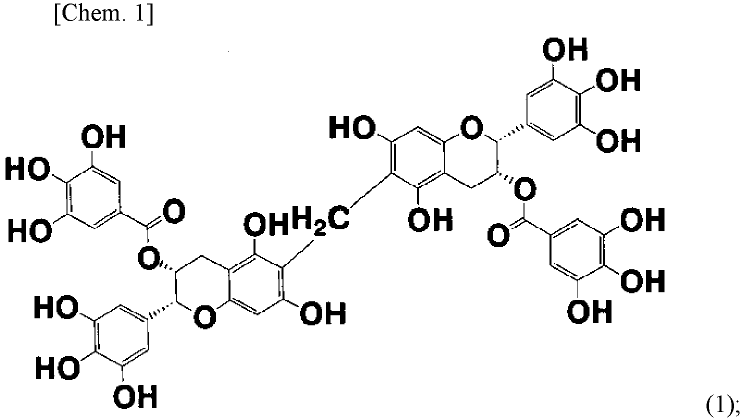
an epigallocatechin gallate trimer represented by the formula (2): 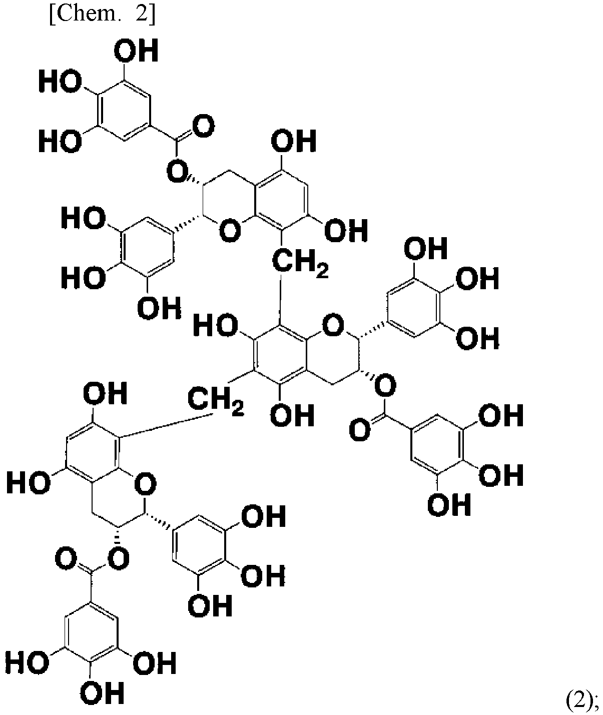
an epigallocatechin dimer represented by the formula (3): 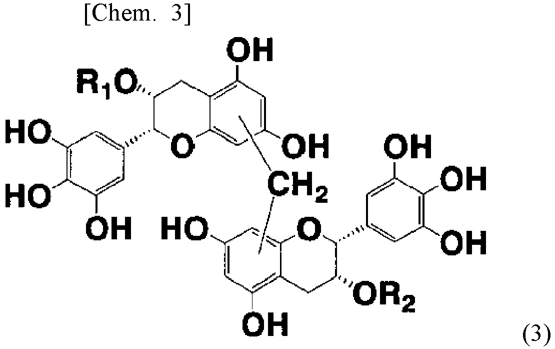
(wherein R₁ and R₂ each independently represent H or a galloyl group);
an epigallocatechin trimer represented by the formula (4): 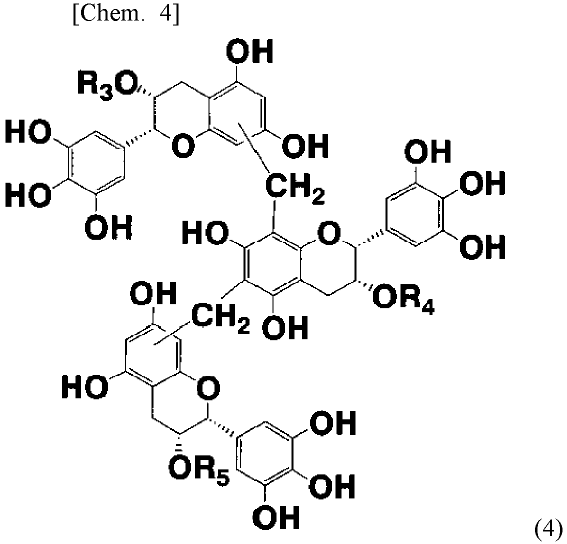
(wherein R₃, R₄ and R₅ each independently represent H or a galloyl group); and
oolongtheanine-3'-O-gallate represented by the formula (5):

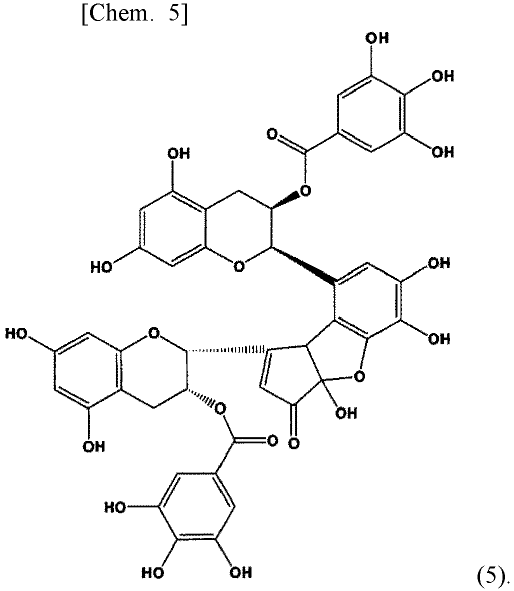

The tea polymeric polyphenol may be selected from the group consisting of the aforementioned compounds.

The tea polymeric polyphenol used in an embodiment of the present invention can be obtained as a plant extract containing a tea polymeric polyphenol. The plant extract is preferably an extract from *Camellia sinensis.* The plant extract can be obtained by, for example, extracting tea leaves of *Camellia sinensis* with a solvent. With regard to tea leaves used as a source ingredient, one type, or two or more types, of unfermented teas such as green tea, semi-fermented teas such as oolong tea, and fermented teas such as black tea, can be used. Among them, semi-fermented or fermented tea leaves rich in a tea polymeric polyphenol, especially oolong tea leaves, are preferably used. As an extraction solvent, cold or hot water, methanol, ethanol, isopropanol, ethyl acetate, and/or the like can be used. Extraction can be performed using any one of such solvents alone or using a mixture of two or more of them. A preferred extraction solvent is hot water, which may be used with addition of sodium bicarbonate. Such a solvent extract of tea leaves may be used as it is without purification, but a concentrated or purified form of extract, which is obtained by selectively removing compounds other than a tea polymeric polyphenol from the solvent extract of tea leaves to increase tea polymeric polyphenol content, is preferably used. Since non-polymeric catechins generally have bitter and astringent tastes, it is particularly preferable to selectively remove a non-polymeric catechin. Examples of extracts obtained in such a manner include a tea extract containing a tea polymeric polyphenol at a concentration four or more times higher than a non-polymeric catechin, as described in International Patent Publication No. WO 2005/077384.

Tea leaves may be extracted as they are. Also, tea leaves containing a tea polymeric polyphenol and a non-polymeric catechin may be treated in advance with an enzyme such as polyphenol oxidase to further increase the degree of polymerization of a tea polymeric polyphenol, and then the treated tea leaves may be extracted. Alternatively, an obtained extract may be enzymatically treated in the aforementioned manner. As the degree of polymerization of a tea polymeric polyphenol becomes higher so that the relative content of the tea polymeric polyphenol is higher than that of a non-polymeric catechin, the unfavorable bitter and astringent tastes become less noticeable and the aroma becomes more favorable.

It is preferred that the relative content of a non-polymeric catechin should be low in the beverage of an embodiment of the present invention. The weight ratio of tea polymeric polyphenol content to non-polymeric catechin content in the beverage ([tea polymeric polyphenol content]/[non-polymeric catechin content]) is preferably not less than 1, more preferably not less than 1.2, still more preferably not less than 1.4. Beverages having such a weight ratio can be prepared utilizing the technique described in International Patent Publication No. WO 2005/077384.

The content of a polymeric polyphenol (preferably, a tea polymeric polyphenol) in the beverage of the present invention is in the range of, for example, from 30 to 500 mg/L, preferably from 40 to 300 mg/L, more preferably from 50 to 200 mg/L, or from 50 to 170 mg/L. When the content of a polymeric polyphenol falls within the aforementioned range, excellent sweetness is more likely to be easily perceived upon combined use of a polymeric polyphenol with the aforementioned aroma components.

When furaneol is used in the present invention, the weight ratio of polymeric polyphenol (preferably, tea polymeric polyphenol) content to furaneol content ([polymeric polyphenol]/[furaneol]) is in the range of, for example, from 0.5 to 1000, preferably from 0.5 to 700, more preferably from 10 to 500. When sotolon is used in this invention, the weight ratio of polymeric polyphenol (preferably, tea polymeric polyphenol) content to sotolon content ([polymeric polyphenol]/[sotolon]) is in the range of, for example, from 10 to 2000, preferably from 20 to 1500, more preferably from 40 to 1200. When cyclotene is used in this invention, the weight ratio of polymeric polyphenol (preferably, tea polymeric polyphenol) content to cyclotene content ([polymeric polyphenol]/[cyclotene]) is in the range of, for example, from 0.2 to 60, preferably from 0.2 to 30, more preferably from 0.2 to 15. When vanillin is used in this invention, the weight ratio of polymeric polyphenol (preferably, tea polymeric polyphenol) content to vanillin content ([polymeric polyphenol]/[vanillin]) is in the range of, for example, from 0.2 to 600, preferably from 5 to 400, more preferably from 10 to 200. When maltol is used in this invention, the weight ratio of polymeric polyphenol (preferably, tea polymeric polyphenol) content to maltol content ([polymeric polyphenol]/[maltol]) is in the range of, for example, from 0.5 to 100, preferably from 1.5 to 80, more preferably from 3 to 60.

The beverage of the present invention not only comprises the different components as mentioned above, but also may have added thereto any one alone, or a combination of, other additives commonly used in beverages, such as antioxidant, emulsifier, preservative, pH adjustor, flavoring, seasoning, sweetener, acidulant, and/or quality stabilizer. From the viewpoint of ensuring that the aroma inherent in tea can be enjoyed, it is preferred not to add such an additive as flavoring, seasoning, sweetener or acidulant.

The pH of the beverage of the present invention is not particularly limited, and is in the range of, for example, from 4.0 to 7.0, preferably from 4.5 to 6.5, more preferably from 5.0 to 6.5.

The beverage of the present invention is a tea beverage. As referred to herein, the **"tea beverage" refers to:** tea such as green tea, black tea, oolong tea, or puerh tea, which is produced mainly using the leaves and/or stems of the tea plant (scientific name: *Camellia sinensis*); a blend of such tea with unpolished rice, barley or similar cereals, or any other various plant ingredients; or a beverage comprising a liquid extracted with an aqueous solvent from an ingredient including mainly the leaves, stems, underground stems, roots, flowers, or fruits of any other plants (including cereals) besides tea plant, or from a blend of those ingredients. In one embodiment, the tea beverage of this invention is a tea beverage comprising a tea extract. **As referred to herein, the "tea extract" refers to an extract from tea** leaves with an extraction solvent.

Examples of the tea beverage of the present invention include non-fermented teas (*e.g.,* green tea), semi-fermented teas (*e.g.,* oolong tea), and fermented teas (*e.g.,* black tea). Specific examples thereof include: steamed, non-fermented teas (green teas), such as *Sencha* (brewed green tea), *Bancha* (coarse green tea), *Houji-cha* (roasted green tea), *Gyokuro* (refined green tea), *Kabuse-cha* (shaded green tea), and *Tencha* (non-ground tea leaves used for *Matcha*); non-fermented teas including *Kamairicha* (pot-roasted green teas) such as *Ureshinocha*, *Aoyagicha*, and Chinese teas; semi-fermented teas such as *Hoshucha*, *Tekkannon* tea, and oolong tea; and fermented teas such as black tea, *Awa-bancha*, and puerh tea. The part of the tea plant to be used to produce tea is not limited at all as long as it can be used to extract drinkable tea -- leaves, stems, and/or other parts can be used as appropriate. The form of the part to be used is also not limited -- big tea leaves, powdered tea leaves, and any other forms are fine. In one embodiment, the tea beverage of this invention is a tea beverage comprising a tea extract. **As referred to herein, the "tea extract" refers to an** extract from tea leaves with an extraction solvent. The tea beverage of this invention is preferably a green tea beverage, an oolong tea beverage, or a black tea beverage.

The beverage of the present invention can be produced by incorporating the aforementioned components in appropriate amounts. Since the beverage of this invention is a tea beverage, the beverage of this invention can be produced by incorporating tea leaves, an extract therefrom, or the like. Further, the beverage of this invention may be made into a packaged beverage by following a sterilization step or the like depending on the need. For example, the beverage can be made into a sterilized, packaged beverage by following the procedure involving the steps of packing the beverage into a package and then subjecting the packed beverage to heat sterilization or the like, or the procedure involving the steps of sterilizing the beverage and then packing it into a package in an aseptic environment. The type of the package is not particularly limited, and examples of the package include PET bottle, can, glass bottle, and paper package. *Inter alia,* clear and colorless PET bottles are preferred, because the color of beverages contained in such bottles can be easily discerned, and also because beverages packed in such bottles are easy to handle.

Another embodiment of the present invention is directed to a method for improving the sweetness of a tea beverage. **As referred to herein,** "improving the sweetness of a tea beverage" **refers to imparting sweetness to a tea beverage which** is not perceived to taste sweet, or enhancing the intensity or quality of sweetness of a tea beverage which is perceived to taste sweet. The tea beverage used in the method of this invention comprises an amino acid or a polymeric polyphenol, and at least one selected from the group consisting of furaneol, sotolon, cyclotene, vanillin, and maltol. Further, the method of this invention comprises:
(a) a step of adjusting the content of furaneol to not less than 1.0 mg/L;
(b) a step of adjusting the content of sotolon to not less than 0.35 mg/L;
(c) a step of adjusting the content of cyclotene to not less than 10 mg/L;
(d) a step of adjusting the content of vanillin to not less than 1.0 mg/L; or
(e) a step of adjusting the content of maltol to not less than 5.0 mg/L.
Various parameters associated with the method of this invention, such as the types and contents of different components contained in the beverage, are as described above in relation to the beverage of this invention or are obvious from the descriptions given above.

### EXAMPLES

Hereunder, the present invention will be specifically described in detail by way of experimental examples, but this invention is not limited to these examples.

### <Experimental Example 1>

In this example, furaneol, sotolon, cyclotene, vanillin, and maltol used as sweet aroma components were investigated for effective concentration ranges. To be specific, different beverage samples were prepared by using theanine as an amino acid and adding different components to water so as to give different final concentrations as shown in the table given below. Among the prepared beverage samples, Samples 1-1, 1-9, 1-10, 2-1, 2-4, 3-1, 3-4, 4-1, 4-5, 5-1, and 5-4 were packed in packages and subjected to heat treatment to produce packaged beverages.

The prepared beverage samples were subjected to sensory evaluation. In the sensory evaluation, the beverage samples were evaluated for sweetness by five professional panelists using a 5-point rating scale from 1 to 5 according to the criteria detailed below. The sensory ratings were first given by each panelist on his/her own, and then finally determined through discussion among all the panelists.
1: No sugar-like sweetness is perceived.
2: Slight sugar-like sweetness is perceived.
3: Sugar-like sweetness is perceived.
4: Sufficient sugar-like sweetness is perceived.
5: Although sugar-like sweetness is perceived, the aroma balance of the beverage is lost.

**[Table 1]**

| | Sample 1-1 | Sample 1-2 | Sample 1-3 | Sample 1-4 | Sample 1-5 | Sample 1-6 | |
|---|---|---|---|---|---|---|---|
| Theanine [ppm] | 1200 | 1200 | 1200 | 1200 | 1200 | 1200 | |
| Furaneol [ppm] | 100 | 50 | 10 | 7.5 | 5 | 3 | |
| Sensory rating | 5 | 4 | 4 | 4 | 4 | 4 | |
| | | | | | | | |

| | Sample 1-7 | Sample 1-8 | Sample 1-9 | Sample 1-10 | Sample 1-11 | | |
|---|---|---|---|---|---|---|---|
| Theanine [ppm] | 1200 | 1200 | 1200 | 1200 | 1200 | | |
| Furaneol [ppm] | 1.5 | 1.1 | 1 | 0.1 | 0 | | |
| Sensory rating | 4 | 3 | 3 | 1 | 1 | | |
| | | | | | | | |

| | Sample 2-1 | Sample 2-2 | Sample 2-3 | Sample 2-4 | Sample 2-5 | | |
|---|---|---|---|---|---|---|---|
| Theanine [ppm] | 1200 | 1200 | 600 | 600 | 600 | | |
| Sotolon [ppm] | 5 | 3 | 0.7 | 0.35 | 0 | | |
| Sensory rating | 5 | 4 | 4 | 4 | 1 | | |
| | | | | | | | |

| | Sample 3-1 | Sample 3-2 | Sample 3-3 | Sample 3-4 | Sample 3-5 | Sample 3-6 | Sample 3-7 |
|---|---|---|---|---|---|---|---|
| Theanine [ppm] | 1200 | 1200 | 600 | 600 | 600 | 600 | 600 |
| Cyclotene [ppm] | 200 | 100 | 75 | 50 | 30 | 10 | 0 |
| Sensory rating | 5 | 4 | 3 | 3 | 2 | 2 | 1 |
| | | | | | | | |

| | Sample 4-1 | Sample 4-2 | Sample 4-3 | Sample 4-4 | Sample 4-5 | Sample 4-6 | Sample 4-7 |
|---|---|---|---|---|---|---|---|
| Theanine [ppm] | 1200 | 1200 | 600 | 600 | 600 | 600 | 600 |
| Vanillin [ppm] | 200 | 100 | 10 | 5 | 3 | 1 | 0 |
| Sensory rating | 5 | 4 | 3 | 3 | 3 | 2 | 1 |
| | | | | | | | |

| | Sample 5-1 | Sample 5-2 | Sample 5-3 | Sample 5-4 | Sample 5-5 | Sample 5-6 | |
|---|---|---|---|---|---|---|---|
| Theanine [ppm] | 1200 | 1200 | 600 | 600 | 600 | 600 | |
| Maltol [ppm] | 100 | 50 | 30 | 10 | 5 | 0 | |
| Sensory rating | 5 | 4 | 3 | 3 | 2 | 1 | |

The results are as shown in the table given above. It was found that sugar-like sweetness was perceived upon combination of an amino acid with not less than 1.0 mg/L of furaneol, not less than 0.35 mg/L of sotolon, not less than 50 mg/L of cyclotene, not less than 3.0 mg/L of vanillin, or not less than 10 mg/L of maltol. Among the samples prepared with addition of furaneol, Samples 1-6 and 1-7 were both perceived to have sufficient sugar-like sweetness, but Sample 1-6 was perceived as stronger in sweetness than Sample 1-7. Samples 1-2 to 1-5 were perceived to have comparable sweetness to Sample 1-6. Therefore, all of the panelists evaluated that it is preferable to add furaneol at a concentration of not less than 3.0 mg/L. Further, Samples 1-2, 2-2, 3-2, 4-2 and 5-2 were perceived to have sufficient sugar-like sweetness, but were evaluated as too strong in sweetness by all of the panelists.

### <Experimental Example 2>

Next, other amino acids besides theanine were also investigated for their effect to impart sugar-like sweetness. Different beverage samples were prepared by using serine, threonine, proline, glycine, and arginine as amino acids and adding different components to water so as to give different final concentrations as shown in the table given below. The prepared beverage samples were subjected to sensory evaluation according to the same criteria and procedure as in Experimental Example 1.

**[Table 2]**

| | Sample 6-1 | Sample 6-2 | Sample 6-3 | Sample 6-4 | Sample 6-5 | Sample 6-6 | | |
|---|---|---|---|---|---|---|---|---|
| Theanine [ppm] | 1800 | 1500 | 1200 | 600 | 140 | 0 | | |
| Furaneol [ppm] | 1 | 1 | 1 | 1 | 1 | 1 | | |
| Sensory rating | 3 | 3 | 3 | 3 | 2 | 1 | | |
| | | | | | | | | |

| | Sample 7-1 | Sample 7-2 | Sample 7-3 | Sample 7-4 | | | | |
|---|---|---|---|---|---|---|---|---|
| Serine [ppm] | 4800 | 3600 | 2400 | 1800 | | | | |
| Furaneol [ppm] | 1 | 1 | 1 | 1 | | | | |
| Sensory rating | 4 | 4 | 3 | 2 | | | | |
| | | | | | | | | |

| | Sample 8-1 | Sample 8-2 | Sample 8-3 | Sample 8-4 | | | | |
|---|---|---|---|---|---|---|---|---|
| Threonine [ppm] | 4800 | 3600 | 2400 | 1800 | | | | |
| Furaneol [ppm] | 1 | 1 | 1 | 1 | | | | |
| Sensory rating | 4 | 4 | 3 | 2 | | | | |
| | | | | | | | | |

| | Sample 9-1 | Sample 9-2 | Sample 9-3 | Sample 9-4 | | | | |
|---|---|---|---|---|---|---|---|---|
| Proline [ppm] | 4800 | 3600 | 2400 | 1800 | | | | |
| Furaneol [ppm] | 1 | 1 | 1 | 1 | | | | |
| Sensory rating | 4 | 4 | 3 | 2 | | | | |
| | | | | | | | | |

| | Sample 10-1 | Sample 10-2 | Sample 10-3 | Sample 10-4 | | | | |
|---|---|---|---|---|---|---|---|---|
| Glycine [ppm] | 4800 | 3600 | 2400 | 1800 | | | | |
| Furaneol [ppm] | 1 | 1 | 1 | 1 | | | | |
| Sensory rating | 4 | 4 | 3 | 2 | | | | |
| | | | | | | | | |

| | Sample 11-1 | Sample 11-2 | Sample 11-3 | Sample 11-4 | Sample 11-5 | Sample 11-6 | Sample 11-7 | Sample 11-8 |
|---|---|---|---|---|---|---|---|---|
| Arginine [ppm] | 1200 | 600 | 300 | 259 | 139 | 62 | 12 | 9 |
| Furaneol [ppm] | 1 | 1 | 1 | 1 | 1 | 1 | 1 | 1 |
| Sensory rating | 4 | 4 | 4 | 4 | 3 | 3 | 2 | 2 |

The results are as shown in the table given above. It was found that serine, threonine, proline, glycine, and arginine, used as other amino acids besides theanine, were also effective in imparting sweetness upon combination with a sweet aroma component.

### <Experimental Example 3>

A plurality of commercially available tea beverages were provided and quantitatively analyzed for the contents of amino acids and a polymeric polyphenol.

### 1. Quantitative analysis of amino acids

| | |
|---|---|
| System: | Chromaster (produced by Hitachi) |
| Column: | Rapid Resolution HD (3.0 mm × 50 mm, produced by Agilent Technology Japan, Ltd.) |
| Solvent A: | Water:AccQ-Tag^{™} Ultra Eluent A = 100:900 |
| Solvent B: | AccQ-Tag^{™} Ultra Eluent |
| Flow rate: | 0.7 mL/min. |
| Column temperature: | 40°C |

### Gradient conditions:

**[Table 3]**

| Time (min) | A | B |
|---|---|---|
| 0.0 | 99.9 | 0.1 |
| 0.5 | 99.9 | 0.1 |
| 6.0 | 90.9 | 9.1 |
| 9.0 | 82.0 | 18.0 |
| 10.0 | 49.4 | 50.6 |
| 10.1 | 10.0 | 90.0 |
| 11.2 | 10.0 | 90.0 |
| 11.6 | 99.9 | 0.1 |
| 13 | Stop | |

| | |
|---|---|
| Detection: | 260 nm |
| Injection volume: | 5.0 **µL** |
| Reference standards: | Arginine, lysine, histidine, phenylalanine, tyrosine, leucine, |

| | |
|---|---|
| | isoleucine, methionine, valine, alanine, glycine, proline, glutamic acid, serine, threonine, aspartic acid, asparagine, and L-theanine |

### 2. Tea polymeric polyphenol

| | |
|---|---|
| System: | Prominence 20A (produced by Shimadzu Corporation) |
| Column: | TSK-gel ODS-80Ts QA (4.6 **mmϕ** × 150 mm, produced by Tosoh Corporation) |
| Solvent A: | Water:acetonitrile:TFA = 900:100:0.5 |
| Solvent B: | Water:acetonitrile:TFA = 200:800:0.5 |
| Flow rate: | 1.0 mL/min. |
| Column temperature: | 40°C |

### Gradient conditions:

**[Table 4]**

| Time (min) | A | B |
|---|---|---|
| 0 | 100 | 0 |
| 5 | 100 | 0 |
| 10 | 92.5 | 7.5 |
| 20 | 89.5 | 10.5 |
| 24 | 89.5 | 10.5 |
| 25 | 25 | 75 |
| 35 | 25 | 75 |
| 36 | 100 | 0 |
| 41 | Stop | |

| | |
|---|---|
| Detection: | 280 nm |
| Injection volume: | 10 **µL** |
| Reference standards: | Oolonghomobisflavan B **(abbreviated as** "OHBF-B") |

The results of quantitative analysis of different tea beverages are shown in the table given below.

**[Table 5]**

| | Oolong tea A | Oolong tea B | Black tea A | Green tea A | Green tea B | Green tea C | Green tea D |
|---|---|---|---|---|---|---|---|
| Histidine | 0.0 | 0.0 | 0.0 | 0.4 | 0.4 | 0.5 | 2.0 |
| Asparagine | 0.3 | 0.5 | 3.6 | 1.2 | 1.0 | 1.4 | 7.1 |
| Serine | 0.3 | 0.5 | 2.8 | 0.7 | 1.3 | 2.9 | 5.6 |
| Arginine | 0.1 | 0.3 | 0.6 | 3.0 | 3.1 | 9.2 | 12.7 |
| Glycine | 0.1 | 0.2 | 0.1 | 0.2 | 0.1 | 0.1 | 0.8 |
| Aspartic acid | 0.6 | 1.2 | 4.6 | 3.5 | 5.3 | 9.5 | 22.2 |
| Glutamic acid | 0.2 | 0.4 | 5.3 | 0.5 | 8.1 | 16.9 | 27.1 |
| Threonine | 0.2 | 0.4 | 1.8 | 1.0 | 1.7 | 2.8 | 6.7 |
| Alanine | 0.2 | 0.5 | 2.2 | 0.8 | 1.5 | 2.3 | 7.0 |
| Theanine | 2.6 | 5.3 | 28.7 | 23.6 | 34.9 | 87.0 | 145.3 |
| Proline | 0.5 | 1.1 | 1.7 | 3.3 | 0.6 | 0.5 | 3.2 |
| Lysine | 0.0 | 0.1 | 0.6 | 0.0 | 0.3 | 0.6 | 0.8 |
| Tyrosine | 0.1 | 0.3 | 1.9 | 0.1 | 0.6 | 0.8 | 1.6 |
| Methionine | 0.0 | 0.0 | 0.0 | 0.0 | 0.0 | 0.0 | 0.0 |
| Valine | 0.1 | 0.2 | 1.2 | 1.6 | 2.0 | 2.0 | 8.6 |
| Isoleucine | 0.1 | 0.2 | 2.1 | 0.1 | 0.5 | 0.5 | 2.1 |
| Leucine | 0.0 | 0.1 | 2.0 | 0.1 | 0.2 | 0.5 | 1.1 |
| Phenylalanine | 0.1 | 0.1 | 2.1 | 0.0 | 0.5 | 0.8 | 1.4 |
| Total amino acids | 5.6 | 11.3 | 61.3 | 40.1 | 62.2 | 138.2 | 255.4 |
| Tea polymeric polyphenol | 87.5 | 175.0 | 132.0 | 80.0 | 57.0 | 34.0 | 52.0 |

| | | | | | | | |
|---|---|---|---|---|---|---|---|
| (Unit: ppm) | | | | | | | |

Different tea beverage samples were prepared by adding each of furaneol, sotolon, cyclotene, vanillin, and maltol as sweet aroma components to each of the different commercially available tea beverages mentioned above so as to give different final concentrations as shown in the table given below. The prepared tea beverage samples were packed in packages and subjected to heat treatment to produce packaged beverages.

The prepared beverage samples were subjected to sensory evaluation. The sensory evaluation was performed according to the same criteria and procedure as in Experimental Example 1.

**[Table 6]**

| | | Oolong tea A | Oolong tea B | Black tea A | Green tea A | Green tea B | Green tea C | Green tea D |
|---|---|---|---|---|---|---|---|---|
| Total amino acids [ppm] | | 5.6 | 11.3 | 61.3 | 40.1 | 62.2 | 138.2 | 255.4 |
| Tea polymeric polyphenol [ppm] | | 87.5 | 175.0 | 132.0 | 80.0 | 57.0 | 34.0 | 52.0 |
| Furaneol [ppm] | 0.1 | 1 | 1 | 1 | 1 | 1 | 1 | 1 |
| | 1 | 3 | 3 | 3 | 3 | 3 | 3 | 3 |
| | 3 | 3 | 4 | 4 | 3 | 4 | 4 | 4 |
| | 50 | 4 | 4 | 4 | 4 | 4 | 4 | 4 |
| | 100 | 5 | 5 | 5 | 5 | 5 | 5 | 5 |
| Sotolon [ppm] | 0.35 | 3 | 3 | 3 | 3 | 3 | 3 | 3 |
| | 0.7 | 4 | 4 | 4 | 4 | 4 | 4 | 4 |
| | 3 | 4 | 4 | 4 | 4 | 4 | 4 | 4 |
| | 5 | 5 | 5 | 5 | 5 | 5 | 5 | 5 |
| Cyclotene [ppm] | 10 | 2 | 2 | 2 | 2 | 2 | 2 | 2 |
| | 50 | 3 | 3 | 3 | 3 | 3 | 3 | 3 |
| | 100 | 3 | 3 | 3 | 3 | 3 | 3 | 3 |
| | 200 | 5 | 5 | 5 | 5 | 5 | 5 | 5 |
| Vanillin [ppm] | 1 | 2 | 2 | 2 | 2 | 2 | 2 | 2 |
| | 3 | 3 | 3 | 3 | 3 | 3 | 3 | 3 |
| | 100 | 4 | 4 | 4 | 4 | 4 | 4 | 4 |
| | 200 | 5 | 5 | 5 | 5 | 5 | 5 | 5 |
| Maltol [ppm] | 5 | 2 | 2 | 2 | 2 | 2 | 2 | 2 |
| | 10 | 3 | 3 | 3 | 3 | 3 | 3 | 3 |
| | 50 | 4 | 4 | 4 | 4 | 4 | 4 | 4 |
| | 100 | 5 | 5 | 5 | 5 | 5 | 5 | 5 |

The results are as shown in the table given above. Beverage samples prepared by adding a specified amount of furaneol, sotolon, cyclotene, vanillin, or maltol to any of oolong tea, black tea, and green tea beverages were perceived to have sugar-like sweetness and evaluated to taste sweet and palatable. Since oolong tea A was very low in amino acid content, it was suggested that a tea polymeric polyphenol acts to produce an effect to impart sugar-like sweetness. The beverage samples prepared by adding 1 ppm or 3 ppm of furaneol to green tea A were both perceived to have sugar-like sweetness, but the sample prepared with 3 ppm of furaneol was perceived as stronger in sweetness than the one prepared with 1 ppm of furaneol. In the different tea beverages, theanine, serine, threonine, proline, glycine, and arginine were all contained as amino acids.

### <Experimental Example 4>

Based on the results obtained in Experimental Example 3, the effect of theanine and arginine at such concentrations as found in green teas C and D was investigated. To be specific, different beverage samples were prepared by adding theanine, arginine and furaneol to water so as to give different final concentrations as shown in the table given below. The prepared beverage samples were subjected to sensory evaluation according to the same criteria and procedure as in Experimental Example 1. The prepared beverage samples were packed in packages and subjected to heat treatment to produce packaged beverages.

**[Table 7]**

| | Sample 12-1 | Sample 12-2 | Sample 12-3 | Sample 12-4 | Sample 12-5 |
|---|---|---|---|---|---|
| Theanine [ppm] | 87.0 | 87.0 | 87.0 | 145.3 | 145.3 |
| Arginine [ppm] | 9.2 | 9.2 | 9.2 | 12.7 | 12.7 |
| Furaneol [ppm] | 3 | 1 | 0.1 | 3 | 1 |
| Sensory rating | 3 | 2 | 1 | 4 | 2 |

The results are as shown in the table given above. It was shown that when specified amounts of theanine and arginine were combined with a sweet aroma component, sugar-like sweetness was perceived.

### <Experimental Example 5>

Combinations of each of the aforementioned sweet aroma components with a tea polymeric polyphenol were investigated. In this experiment, the tea polymeric polyphenol was produced according to the procedure described below.

One hundred grams of oolong tea leaves were extracted by the column method with 0.15 wt.% of a sodium bicarbonate solution (at 95°C) to obtain about 2000 g of a liquid extract of oolong tea. The liquid extract was kept at a liquid temperature of from 70 to 80°C and passed through from 100 to 130 kg of a granular activated carbon (GW-H32/60, produced by Kuraray Co., Ltd.) to selectively remove non-polymeric catechins and caffeine. The filtrate was concentrated under reduced pressure to prepare about 400 g of a tea polymeric polyphenol-rich essence with a Brix of not less than 10 (concentrated oolong tea extract; "essence"). The tea polymeric polyphenol concentration in the obtained essence was measured by HPLC under the conditions detailed above, and found to be 1.28 wt.%.

Next, different beverage samples were prepared by adding each of the sweet aroma components and the tea polymeric polyphenol-rich essence to water so as to give different final concentrations as shown in the table given below. The prepared beverage samples were subjected to sensory evaluation according to the same criteria and procedure as in Experimental Example 1. The prepared beverage samples were packed in packages and subjected to heat treatment to produce packaged beverages.

**[Table 8]**

| Tea polymeric polyphenol [ppm] | | 204.0 | 306.0 | 408.0 |
|---|---|---|---|---|
| Furaneol [ppm] | 0.1 | 1 | 1 | 1 |
| | 1 | 3 | 3 | 3 |
| | 2 | 3 | 3 | 3 |
| | 3 | 3 | 4 | 4 |
| | 4 | 3 | 4 | 4 |
| | 50 | 4 | 4 | 4 |
| | 100 | 5 | 5 | 5 |
| Sotolon [ppm] | 0.35 | 3 | 3 | 3 |
| | 0.7 | 4 | 4 | 4 |
| | 3 | 4 | 4 | 4 |
| | 5 | 5 | 5 | 5 |
| Cyclotene [ppm] | 10 | 2 | 2 | 2 |
| | 50 | 3 | 3 | 3 |
| | 100 | 3 | 3 | 3 |
| | 200 | 5 | 5 | 5 |
| Vanillin [ppm] | 1 | 2 | 2 | 2 |
| | 3 | 3 | 3 | 3 |
| | 100 | 4 | 4 | 4 |
| | 200 | 5 | 5 | 5 |
| Maltol [ppm] | 5 | 2 | 2 | 2 |
| | 10 | 3 | 3 | 3 |
| | 50 | 4 | 4 | 4 |
| | 100 | 5 | 5 | 5 |

The results are as shown in the table given above. Beverage samples prepared by mixing a specified amount of furaneol, sotolon, cyclotene, vanillin, or maltol with a tea polymeric polyphenol were perceived to have sugar-like sweetness and evaluated to taste sweet and palatable. Those samples with a tea polymeric polyphenol concentration of 204 ppm, which were prepared with addition of from 1 to 4 ppm of furaneol, were all perceived to have sugar-like sweetness. However, among them, those samples prepared with 3 ppm or 4 ppm of furaneol were perceived as stronger in sweetness than the ones prepared with 1 ppm or 2 ppm of furaneol. The samples prepared with addition of 0.35 ppm of sotolon were all perceived to have sugar-like sweetness. However, among them, those samples with a tea polymeric polyphenol concentration of 306 ppm or 408 ppm were perceived as stronger in sweetness than the one with a tea polymeric polyphenol concentration of 204 ppm. Likewise, among the samples prepared with addition of 100 ppm of cyclotene or with addition of 10 ppm of maltol, those samples with a tea polymeric polyphenol concentration of 306 ppm or 408 ppm were perceived as stronger in sweetness than the ones with a tea polymeric polyphenol concentration of 204 ppm.

## Claims

1. A tea beverage comprising an amino acid or a polymeric polyphenol, and at least one selected from the group consisting of furaneol, sotolon, cyclotene, vanillin, and maltol, wherein:
(a) the content of furaneol is not less than 1.0 mg/L;
(b) the content of sotolon is not less than 0.35 mg/L;
(c) the content of cyclotene is not less than 10 mg/L;
(d) the content of vanillin is not less than 1.0 mg/L; or
(e) the content of maltol is not less than 5.0 mg/L.

2. The beverage according to claim 1, comprising an amino acid and a polymeric polyphenol.

3. The beverage according to claim 1 or 2, wherein the amino acid is at least one selected from the group consisting of theanine, serine, threonine, proline, glycine, and arginine.

4. The beverage according to any one of claims 1 to 3, wherein the content of the polymeric polyphenol is in the range of from 30 to 500 mg/L.

5. The beverage according to any one of claims 1 to 4, wherein the beverage is a green tea beverage, an oolong tea beverage, or a black tea beverage.

6. A method for improving the sweetness of a tea beverage comprising an amino acid or a polymeric polyphenol, and at least one selected from the group consisting of furaneol, sotolon, cyclotene, vanillin, and maltol, the method comprising:
(a) a step of adjusting the content of furaneol to not less than 1.0 mg/L;
(b) a step of adjusting the content of sotolon to not less than 0.35 mg/L;
(c) a step of adjusting the content of cyclotene to not less than 10 mg/L;
(d) a step of adjusting the content of vanillin to not less than 1.0 mg/L; or
(e) a step of adjusting the content of maltol to not less than 5.0 mg/L.
